(19) 

Europäisches
Patentamt

European
Patent Office

Office européen
des brevets

(11) **EP 2 582 130 A2**

(12) **EUROPEAN PATENT APPLICATION**

(43) Date of publication:
**17.04.2013 Bulletin 2013/16**

(21) Application number: **12187937.3**

(22) Date of filing: **10.10.2012**

(51) Int Cl.:
*H04N 5/33* (2006.01)     *H04N 5/359* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.10.2011 JP 2011227208**

(71) Applicant: **Kabushiki Kaisha Toshiba
Tokyo (JP)**

(72) Inventors:
  • **Honda, Hiroto
    Tokyo (JP)**
  • **Funaki, Hideyuki
    Tokyo (JP)**

  • **Sasaki, Keita
    Tokyo (JP)**
  • **Suzuki, Kazuhiro
    Tokyo (JP)**
  • **Atsuta, Masaki
    Tokyo (JP)**
  • **Ishii, Koichi
    Tokyo (JP)**
  • **Fujiwara, Ikuo
    Tokyo (JP)**

(74) Representative: **HOFFMANN EITLE
    Patent- und Rechtsanwälte
    Arabellastrasse 4
    81925 München (DE)**

(54) **Infrared solid state imaging device**

(57)     An infrared solid state imaging device includes an infrared detection element unit having heat sensitive pixels, an AD conversion unit which conducts analog-to-digital conversion on an infrared image signal obtained by the infrared detection element unit, and a digital signal processing unit which converts the image signal converted to a digital signal. The digital signal processing unit stores an image value produced from the digital signal, and acquired in a frame immediately preceding a current frame, subtracts an image value obtained by multiplying the image value acquired in the frame immediately preceding the current frame by a predetermined constant $\alpha$ in a range of 0 to 1, from an image value acquired in the current frame, and conducts processing of multiplying a resultant image value obtained by the subtraction by $1/(1 - \alpha)$ so that an infrared image with less afterimage is provided.

FIG. 1

**EP 2 582 130 A2**

**Description**

FIELD

Embodiments described herein relate generally to an infrared solid state imaging device.

BACKGROUND

Infrared rays make it possible to image temperature distribution of an object even in darkness. Furthermore, since infrared rays have a merit that its permeability is high with respect to smoke and fog as compared with visible light, infrared imaging is possible night and day. Furthermore, since temperature information of an object can also be obtained in the infrared imaging, the infrared imaging has a wide application range as in surveillance cameras and fire alarm cameras not to speak of the defense field.

In recent years, development of "uncooled infrared solid state imaging element" which does not need a cooling mechanism has become vigorous. The uncooled, i.e., thermal type infrared solid state imaging device converts incident infrared rays having a wavelength of approximately 10 $\mu$m to heat by using an absorption structure, and converts a temperature change in a heat sensitive portion generated by the converted feeble heat to an electric signal by using some thermoelectric conversion elements. The uncooled infrared solid state imaging device obtains infrared image information by reading out the electric signal. When converting incident infrared rays to heat, it is necessary to thermally insulate the absorption structure of incident infrared rays from the substrate and usually the thermal type infrared solid state imaging element is made to operate in the vacuum.

One of indexes which represent performance of the infrared sensor is NETD (Noise Equivalent Temperature Difference) which represents the temperature resolution of the infrared sensor. It is important to make the NETD small, i.e., make the temperature difference of an infrared detection element which is equivalent to noise small. Furthermore, when converting light to temperature, the thermal type infrared detection element has a determinate thermal time constant, and it cannot follow an object which changes fast. The pixel sensitivity and the thermal time constant are in the antinomic relation. If the thermal insulation property is enhanced in order to improve the sensitivity, heat becomes hard to escape and consequently the thermal time constant is aggravated. In other words, since the thermal time constant is aggravated, only an infrared image containing an afterimage is obtained.

In the X-ray inspection device, a method of calculating an attenuation rate "r" of an afterimage, subtracting r times an output signal measured last time from (1 + r) times an output signal measured this time, and thereby correcting the afterimage is known. In this case, the ratio of the output signal measured last time which should be subtracted to the output signal measured this time becomes r/(1 + r), and there is a drawback that it becomes less than the afterimage r which is actually included.

BRIEF DESCRIPTION OF THE DRAWINGS

FIG. 1 is a schematic diagram showing a configuration of an infrared solid state imaging device according to a first embodiment;
FIG. 2 is a diagram showing a configuration of an infrared detection element unit according to the first embodiment;
FIG. 3 is a diagram showing a concrete configuration of a heat sensitive pixel in an infrared detection element unit according to the first embodiment;
FIG. 4 is a sectional view in the case where the heat sensitive pixel is cut at right angles to paper along a line IV-IV shown in FIG. 3;
FIG. 5 is a diagram showing an example of a voltage - current characteristics of pn junction diodes in a thermoelectric conversion element of the heat sensitive pixel in the infrared detection element unit according to the first embodiment;
FIG. 6 is a diagram schematically showing a temperature rise of the thermoelectric conversion element at the time when the thermoelectric conversion element has received pulse-shaped infrared rays from a heat source;
FIG. 7 is a diagram schematically showing contribution of heat generated in a current frame and its immediately preceding frame to image information at the current time;
FIG. 8 is a schematic diagram drawn by developing afterimage information of the past in the current frame to corresponding past time; and
FIG. 9 is a diagram showing a configuration of a digital signal processing unit according to the first embodiment.

## DETAILED DESCRIPTION OF THE INVENTION

An infrared solid state imaging device according to the present embodiment includes an infrared detection element unit having heat sensitive pixels, an AD conversion unit which conducts analog-digital conversion on an infrared image signal obtained by the infrared detection element unit, and a digital signal processing unit which converts the image signal converted to a digital signal. The digital signal processing unit stores an image value produced from a digital signal, and acquired in a frame immediately preceding a current frame, and conducts processing of multiplying the image value acquired in the immediately preceding frame by a predetermined constant $\alpha$ in the range of 0 to 1, subtracting a resultant image value from an image value acquired in the current frame, and multiplying a resultant difference image value by 1/(1 - a).

Hereafter, embodiments will be described with reference to drawings.


(First Embodiment)

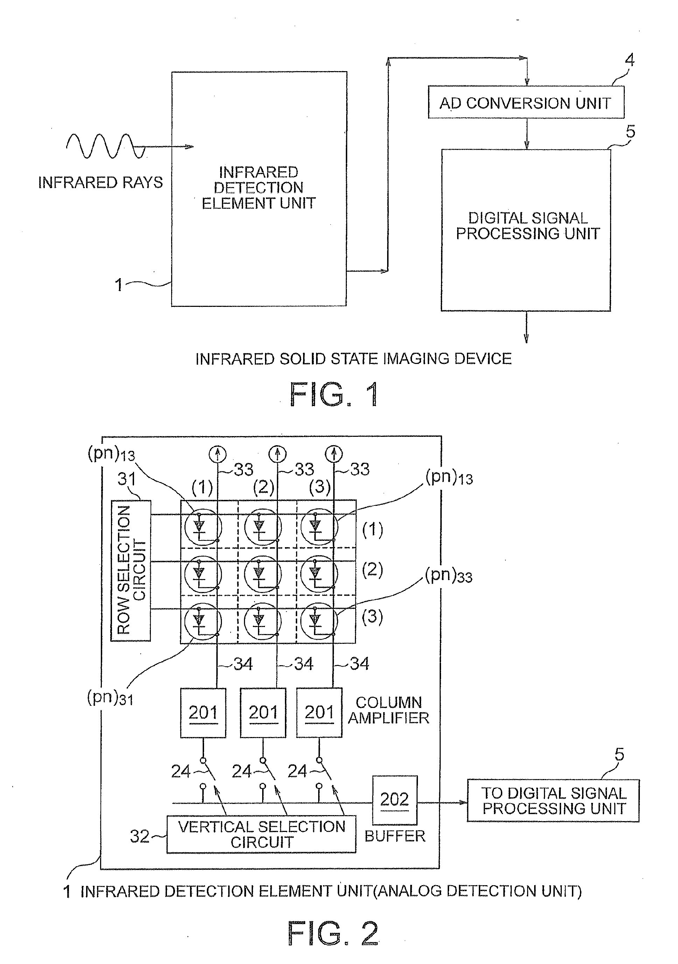

FIG. 1 shows a configuration of an infrared solid state imaging device according to a first embodiment. The infrared solid state imaging device includes an infrared detection element unit (analog detection unit) 1 shown in a left part of FIG. 1 and an AD conversion unit 4 and a digital signal processing unit 5 which are shown in a right part of FIG. 1. Infrared rays incident from the external on the infrared detection element unit 1 are detected by the infrared detection element unit (analog detection unit) 1. An analog electric signal (image signal) of the detected infrared ray is sent to the AD conversion unit 4, and converted to a digital signal by the AD conversion unit 4. This digital signal is sent to the digital signal processing unit 5. In the digital signal processing unit 5, afterimage reducing processing is conducted by multiplying an image value (a digital signal of an infrared image) in a frame immediately preceding each frame by a constant and subtracting a resultant value from an image value in the each frame.

FIG. 2 shows a concrete configuration example of the infrared detection element unit 1. The infrared detection element unit 1 includes an imaging area having a plurality of heat sensitive pixels $(pn)_{ij}$ (i, j = 1, 2, 3) arranged in a matrix form, a row selection circuit 31, column amplifiers 201, a vertical selection circuit 32, and a buffer 202.

In the present embodiment, the imaging area has, for example, heat sensitive pixels (such as diodes) arranged in a 3 $\times$ 3 matrix and each heat sensitive pixel has sensitivity for infrared rays. The reason why the imaging area has the 3 $\times$ 3 matrix is that description concerning operation of the infrared solid state imaging device according to the present embodiment is simplified. Typically, the imaging area has a larger number of heat sensitive pixels arranged in an m $\times$ n matrix. Each heat sensitive pixel has, for example, at least one pn junction diode. FIG. 2 illustrates a case in which each heat sensitive pixel includes one pn junction diode.

Readout operation of pn junction diodes which are heat sensitive pixels arranged in the 3 $\times$ 3 matrix form shown in FIG. 2 will now be described.

Anodes of pn junction diodes which are heat sensitive pixels on the same row are connected to the row selection circuit 31 by the same interconnection. In FIG. 2, for example, $(pn)_{11}$, $(pn)_{12}$ and $(pn)_{13}$ are connected to the same row selection line r1 extending from the row selection circuit 31. In the same way, $(pn)_{21}$, $(pn)_{22}$ and $(pn)_{23}$ are connected to the same row selection line r2 extending from the row selection circuit 31, and $(pn)_{31}$, $(pn)_{32}$ and $(pn)_{33}$ are connected to the same row selection line r3 extending from the row selection circuit 31. The row selection lines r1, r2 and r3 are selected in order row by row by the row selection circuit 31, and a bias voltage Vd is applied to the selected row selection line. If the bias voltage Vd is applied, a constant current If flows through each constant current source 33 and a forward voltage Vf of a pn junction is determined. Cathodes of pn junction diodes connected to the same column are connected to a vertical signal line 34, and the cathodes assume a potential of Vd - Vf.

If the bias voltage Vd is applied to pn junction diodes on the row selection line r1 at certain time t1, then $(pn)_{11}$, $(pn)_{12}$ and $(pn)_{13}$ differ in temperature Tp(t) according to a signal of an object and consequently they differ in Vf, i.e., Vd - Vf, as well. And the voltages Vd - Vf of $(pn)_{11}$, $(pn)_{12}$ and $(pn)_{13}$ are input to the column amplifiers 201 through the vertical signal lines 34, amplified therein, and read out in order column by column by the vertical selection circuit 32. A resultant serial signal is sent out from the analog detection unit 1 via the buffer 202. The serial signal is sent to the digital signal processing unit 5 through the AD conversion unit 4 which will be described later. At subsequent time t2, the bias voltage Vd is applied to pn junction diodes on the row selection line r2, and voltages Vd - Vf of $(pn)_{21}$, $(pn)_{22}$ and $(pn)_{23}$ are input to the column amplifiers 201 through the vertical signal lines 34, amplified therein, and read out in order column by column by the vertical selection circuit 32. A resultant serial signal is sent out from the analog detection unit 1 via the buffer 202. The serial signal is sent to the digital signal processing unit 5 in the same way. At further subsequent time t3, the bias voltage Vd is applied to pn junction diodes on the row selection line r3, and voltages Vd - Vf of $(pn)_{31}$, $(pn)_{32}$ and $(pn)_{33}$ are input to the column amplifiers 201 through the vertical signal lines 34. A resultant serial signal is sent out from the analog detection unit 1 via the buffer 202. The serial signal is sent to the digital signal processing unit 5 in the same way. The buffer 202 has a function of conducting impedance matching when transmitting a signal from the analog detection unit 1 to the digital signal processing unit 5 and preventing signal interference between the analog detection unit 1 and the digital signal processing unit 5. Time (t3 - t1) represents a time period of one frame in the infrared solid state imaging device according to the present embodiment.

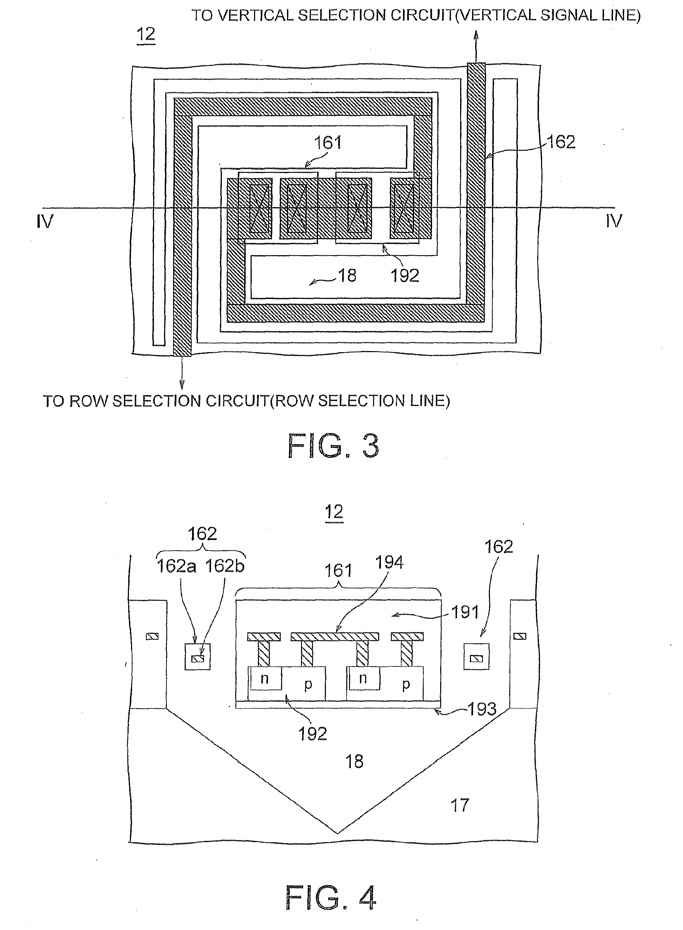

A structure of a heat sensitive pixel $(pn)_{ij}$ (i, j = 1, 2, 3) in the infrared detection element unit 1 according to the present embodiment will now be described with reference to FIG. 3 and FIG. 4. FIG. 3 is a plane view which specifically shows a structure of a heat sensitive pixel 12 in the infrared detection element unit 1 according to the present embodiment. FIG. 4 is a sectional view of the heat sensitive pixel 12 at the time when it is cut along a cutting line IV - IV shown in FIG. 3. The heat sensitive pixel 12 is formed on a SOI substrate. The SOI substrate includes a support substrate 17, a buried insulation layer (BOX layer) 193, and a SOI (Silicon-On-Insulator) layer composed of silicon single crystal. A concave part 18 is formed in a surface part of the SOI substrate. And the heat sensitive pixel 12 includes a thermoelectric conversion element 161 formed in the SOI layer, and a support structure 162 which supports the thermoelectric conversion element 161 over the concave part 18. The thermoelectric conversion element 161 includes a plurality of (two in FIGS. 3 and 4) pn junction diodes 192 connected in series, an interconnection 194 which connects these pn junction diodes 192, and an infrared absorption film 191 formed to cover the pn junction diodes 192 and the interconnection 194. The support structure 162 includes a connection interconnection 162b connected at its first end to a corresponding row selection line and connected at its second end to a first end of a series circuit composed of pn junction diodes 192 connected in series, and an insulation film 162a which covers the connection interconnection 162b.

The infrared absorption film 191 generates heat due to incident infrared rays. The diodes 192 convert the heat generated by the infrared absorption film 191 to an electric signal. The support structure 162 is formed long and narrowly to surround the periphery of the thermoelectric conversion element 161. As a result, the thermoelectric conversion element 161 is supported over the SOI substrate in the state in which heat is nearly insulated from the SOI substrate. Owing to such a hollow heat insulation structure, the heat sensitive pixel 12 can accumulate heat generated according to the incident infrared rays and output a voltage based on the heat to a signal line. The bias voltage Vd from the row selection line is transferred to the diodes 192 via the interconnection 162b. A cathode side voltage of the diodes 192, i.e., the signal voltage is transferred to vertical signal lines 34(1), 34(2) or 34(3) via the interconnection 162b.

Owing to such a structure, the heat sensitive pixel 12 can accumulate heat generated according to the incident infrared rays and output a voltage based on the heat to a signal line.

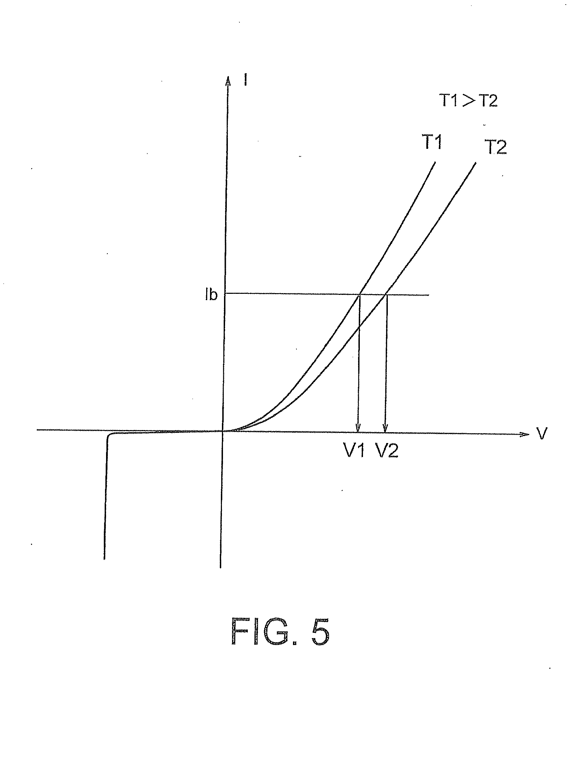

FIG. 5 is a diagram showing an example of a voltage - current relation in the pn junction diodes 192 in the thermoelectric conversion element 161 according to the first embodiment. The pn junction diodes 192 are used in a region having a forward characteristic in the voltage-current relation, i.e., in a region having a characteristic that if the voltage supplied in the forward direction is increased, the current increases. A function as an infrared detection element is obtained by flowing a constant current through such pn junction diodes 192 and measuring a voltage change. For example, it is supposed in FIG. 5 that an anode-cathode voltage of the pn junction diodes 192 is Vd when infrared rays are not received and a constant current is let flow. When infrared rays are incident on the infrared absorption film 191 which covers the pn junction diodes 192, the infrared absorption film 191 generates heat according to the incident infrared rays. And the I-V characteristic exhibited by the pn junction diodes 192 changes. Under a condition that a constant current is caused to flow, the anode-cathode voltage of the pn junction diodes 192 after the incidence of infrared rays shifts to the low voltage side, for example, as shown in FIG. 5. In this way, the pn junction diodes 192 in the thermoelectric conversion element converts a temperature change of the pn junction diodes 192 caused by heat generated in the infrared absorption film 191 to a voltage change. With a bias current of the pn junction diodes 192 kept constant, a change of the forward voltage of them can be taken out as a signal.

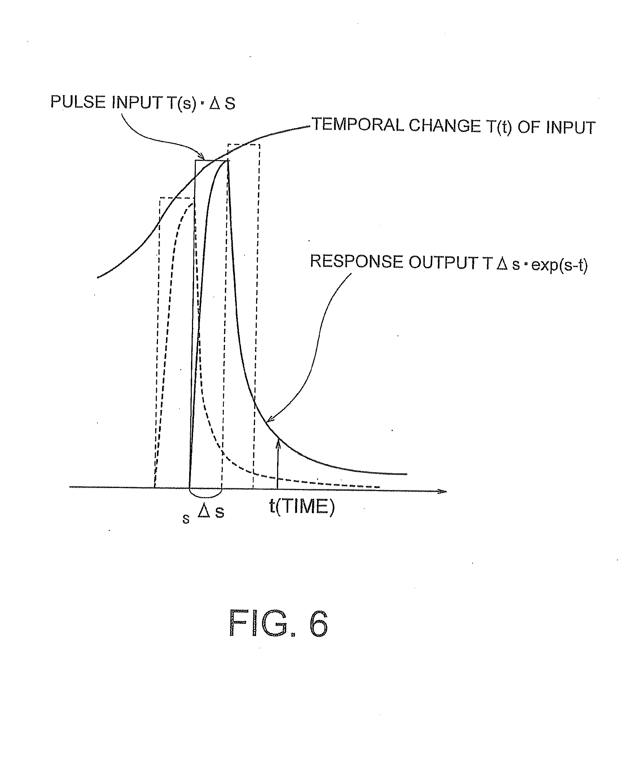

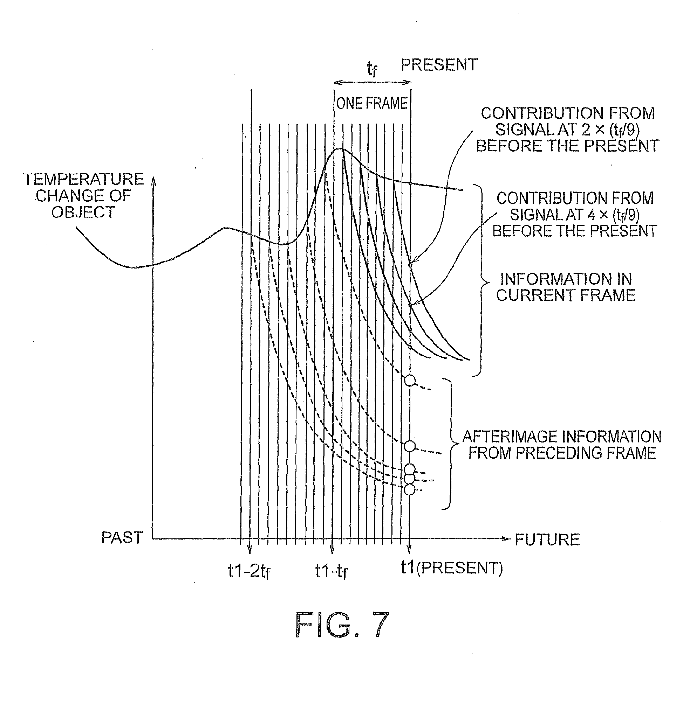

A temperature rise of the thermoelectric conversion element at the time when the thermoelectric conversion element has received infrared rays from a heat source will now be described quantitatively. FIG. 6 is a diagram schematically showing a temperature rise of the thermoelectric conversion element at the time when the thermoelectric conversion element has received infrared rays from a heat source. As shown in FIG. 6, each heat sensitive pixel receives an (infrared) input which changes with time from the external. One heat sensitive pixel receives infrared rays of a pulse $T(s)\Delta s$ or a delta function $T.\delta(s - t)$ at time s of a certain instant. Here, $\Delta s$ represents a pulse width, and T(s) represents a pulse height T(s). Upon receiving such pulse-shaped infrared rays, the heat sensitive pixel 12 generates heat of $T(s)\Delta s \cdot \exp(s - t)$ as a response output. Heat generated by one heat sensitive pixel 12 attenuates in an exponential function way with time. Since pulse inputs of infrared rays come in one after another, however, heat which is generated by the same heat sensitive pixel in the past and which has attenuated is also accumulated. This is represented in relation to imaging frames of the infrared solid state imaging device as shown in FIG. 7. FIG. 7 is a diagram schematically showing contribution of heat generated in a current frame and its immediately preceding frame to image information at the current time. Information in the current frame contains information of its immediately preceding past frame. In FIG. 7, one frame time period is equally divided into nine parts corresponding to nine heat sensitive pixels in accordance with the present embodiment. Heat at current time t1 is composed of heat generated in a past time period in a current frame (in FIG. 7, information in current frame (1)) and heat generated in past frames (in FIG. 7, afterimage information from the preceding frame (2)). As shown in FIG. 7, the information in the current frame contains information in the preceding frame as the afterimage.

Denoting a temperature change of an object at certain time t by Tt(t) and a temperature change of the thermoelectric conversion element 161 by Tp(t), a relation between them is represented by the following Equation (1).

$$T_p(t) = \frac{A}{\tau} \int^t \exp(\frac{s-t}{\tau}) T_t(s) ds \qquad (1)$$

Here, $\tau$ is a thermal time constant of a heat sensitive pixel, and it is typically in the range of approximately 10 ms to 100 ms. Equation (1) represents that a result obtained by performing convolution integral on the object temperature Tt(t) with an exponential function becomes the temperature Tp(t) of the thermoelectric conversion element 161. The convolution integral represented by Equation (1) can be rewritten as shown in the following Equation (2).

$$
\begin{aligned}
Tp(t) &= \frac{A}{\tau} \int_{-\infty}^{t} \exp\left(\frac{s-t}{\tau}\right) Tt(s) ds \\
&= \frac{A}{\tau} \int_{-\infty}^{t-t_f} \exp\left(\frac{s-t}{\tau}\right) Tt(s) ds + \frac{A}{\tau} \int_{t-t_f}^{t} \exp\left(\frac{s-t}{\tau}\right) Tt(s) ds \\
&= \frac{A}{\tau} \int_{-\infty}^{t'} \exp\left(\frac{s-t'-t_f}{\tau}\right) Tt(s) ds + \frac{A}{\tau} \int_{t-t_f}^{t} \exp\left(\frac{s-t}{\tau}\right) Tt(s) ds \qquad (2) \\
&= \frac{A}{\tau} \int_{-\infty}^{t'} \exp\left(\frac{s-t'}{\tau}\right) \exp\left(-\frac{t_f}{\tau}\right) Tt(s) ds + \frac{A}{\tau} \int_{t-t_f}^{t} \exp\left(\frac{s-t}{\tau}\right) Tt(s) ds \\
&= \exp\left(-\frac{t_f}{\tau}\right) \frac{A}{\tau} \int_{-\infty}^{t'} \exp\left(\frac{s-t'}{\tau}\right) Tt(s) ds + \frac{A}{\tau} \int_{t-t_f}^{t} \exp\left(\frac{s-t}{\tau}\right) Tt(s) ds
\end{aligned}
$$

Here, letting t' = t - $t_f$ in the integral in the first term of the second formula.

In Equation (2), the first term is a product of the contribution from all past frames and exp $(-t_f/\tau)$, and the second term is information in the current frame. The first term represents afterimage information of the past frames. In other words, Equation (2) represents that the afterimage information can be removed by subtracting the product of all frame information and exp $(-t_f/\tau)$ from the current frame information. In other words, the afterimage signal is contained in the pixel by a rate which is represented accurately by the following Equation (3).

$$\alpha_{th} = \exp\ (-t_f/\tau) \qquad (3)$$

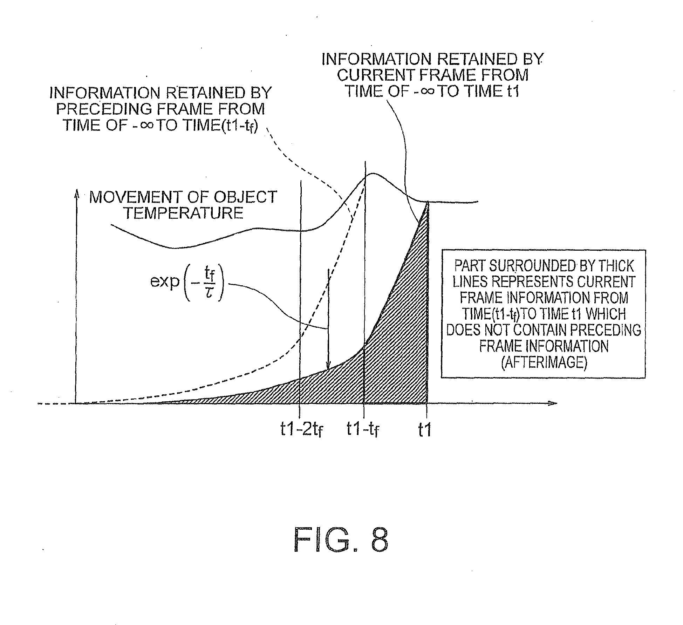

Schematically representing information along the time axis shown in FIG. 7 inclusive of the contribution of a signal (afterimage signal) from the past time, FIG. 8 is obtained. FIG. 8 is a schematic diagram showing contributions to the integral in Equation (1), i.e., a schematic diagram drawn by developing each of black circles and white circles drawn on a time t1 axis in FIG. 7 to past time corresponding thereto. A shaded part in FIG. 8 represents object information (infrared information emitted by the object) in the range of past of -∞ to current time t1. A shaded part surrounded by thick lines is object information which does not contain afterimage information and which is obtained in the present embodiment. The term "object information which does not contain afterimage information" means object information integrated from readout (one frame before) at time t1 - $t_f$ in the preceding frame until readout at time t1 (the present time) of the current frame when attention is paid to a certain pixel. The concept of frame is a time period lasting from the time when scan of all pixels is started until the scan is finished. Time selected in the frame differs depending upon the "position" of the pixel. From any pixel, however, object information integrated from time (t1 - $t_f$) to time t1 contributes to constitution of a clear infrared image as information which does not contain the afterimage.

In FIG. 8, the shaded part excepting the part surrounded by the thick lines represents afterimage information in past frames, and it constitutes a part of infrared image information retained by the current frame. In the present embodiment, an infrared solid state imaging device capable of removing this afterimage information is provided. In addition, a part represented by a dashed line in FIG. 8 represents the integral which is not multiplied by the coefficient in the first term in Equation (2), i.e., Equation (1). The part represented by the dashed line in FIG. 8 represents infrared image information of one frame before. In other words, image information represented by Equation (1) is output from the infrared detection element unit 1 every frame. Furthermore, Equation (1) is similar to an equation of an output voltage Vout(t) obtained when a signal voltage Vin(t) is input to an RC filter circuit, and it is meant that the thermal type infrared sensor can be regarded thermally as an RC filter circuit. R (represented as Rth) is a heat resistance and it assumes a greater value as the support structure 162 becomes thinner and longer. C (represented as Cth) corresponds to a heat capacity, and it assumes a greater value as the volume of the thermoelectric conversion element 161 becomes greater. The thermal time constant $\tau$ is represented as $\tau = Rth \cdot Cth$.

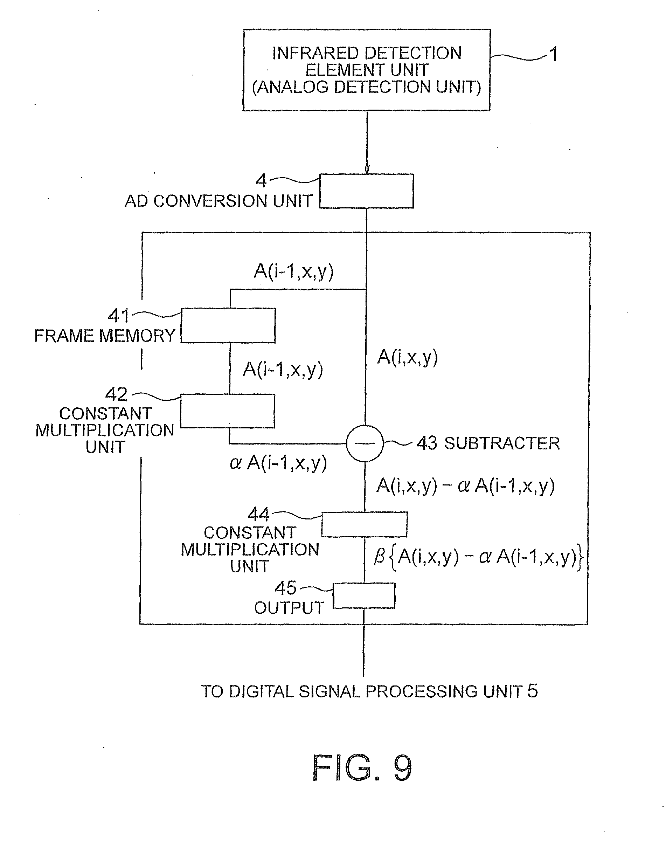

A function of the digital signal processing unit 5 will now be described. FIG. 9 is a diagram showing a configuration of the digital signal processing unit 5 according to the first embodiment. A serial signal which is output from the infrared detection element unit 1 is subject to analog-to-digital conversion in the AD conversion unit 4 to yield an image signal. Hereafter, an image value of a row y, a column x and a frame number i is represented as A(i, x, y),

The image value is input to the digital signal processing unit 5. The digital signal processing unit 5 includes a frame memory 41, a constant multiplication unit 42, a subtracter 43, and a constant multiplication unit 44. An image value A(i-1, x, y) of the preceding frame is stored in the frame memory in a stage of the preceding frame. This value is multiplied by a predetermined arbitrary multiplier $\alpha$ in the constant multiplication unit 42. This multiplier $\alpha$ represents an afterimage reduction rate. If, for example, $\alpha = 20\%$ (0.2) is set in the case where one heat sensitive pixel produces an afterimage signal of $\alpha_{th} = 30\%$, the afterimage is reduced accurately to 0.3 - 0.2 = 0.1 (10%). In the subtracter 43, $\alpha A$(i-1, x, y) is subtracted from an image value A(i, x, y) of the current frame. As a result, A(i, x, y) - $\alpha$A(i-1, x, y) is output from the subtracter 43. For example, when A(i, x, y) = 100, A(i-1, x, y) = 100, and $\alpha$ = 20%, a calculation result of A(i, x, y) - $\alpha$A(i-1, x, y) becomes 80 which is lower as compared with the case where the afterimage reduction is not conducted. The calculation result is multiplied by a constant 1/(1 - a) in the constant multiplication unit 44 in order to adjust the luminance. When $\alpha$ = 20%, the constant 1/(1 - $\alpha$) becomes 1.25 and the calculation result 80 is restored to 80 × 1.25 = 100. As a result, A'(i, x, y) = {1/(1 - $\alpha$)} × { A(i, x, y) - $\alpha$A(i-1, x, y)} is output as an image value after the afterimage reduction.

Even when imaging an object with very strong infrared rays, the temperature rise of the thermoelectric conversion element 161 in the infrared detection element unit 1 is minute, and consequently the thermal time constant $\tau$ is always constant. In other words, the afterimage signal is constant. Even if $\alpha$ is set uniformly for all pixels beforehand, therefore, problems are hardly posed.

According to the present embodiment, the afterimage signal can be reduced effectively with simple means regardless of the signal from the object, as described heretofore.


(Second Embodiment)

In a CMOS image sensor which is a visible light sensor, it is possible to output a signal level (dark level) at the time when imaging is not conducted every pixel and correct unevenness of the dark level among pixels by electrically resetting signal charges stored on photodiodes. In the thermal type infrared detection element unit, however, each heat sensitive pixel always reflects some object temperature signal. Unless physical light interception operation using a mechanical shutter is conducted, therefore, the thermal dark level cannot be acquired. Especially in the thermal type infrared detection element unit, unevenness of the dark level among heat sensitive pixels is several digits greater than the object temperature signal. Therefore, dark level correction becomes indispensable.

During the light interception operation using the mechanical shutter, information from the object is interrupted. In an application which needs continuous imaging, therefore, it is desirable to make the light interception operation as short as possible.

Furthermore, for acquiring the dark level, it is necessary to average electrical random noise and improve the precision of a dark level image (an image of a fixed pattern). For this purpose, averaging is conducted over several frames to several tens frames. The several frames to several tens frames for averaging are referred to as averaging frame group.

During several frames after the light interception is started, the afterimage of the object information becomes remarkable as described above. If frames having the remaining afterimage information are included in the averaging frame group, then the image of the afterimage in the object signal remains in the dark level image and consequently the image of the afterimage in the object signal at this time sticks after the correction.

In a frame during which the shutter is closed, such an influence of the object signal can be removed by setting the constant $\alpha$ just equal to $\alpha_{th}$ determined from a product of the heat capacity and a thermal resistance of the pixel according to Equation (3). In other words, the afterimage can be reduced to just 0%.

According to the present embodiment, the light interception operation time period using the mechanical shutter can be shortened and the afterimage signal can be reduced effectively regardless of the signal from the object by completely removing the object signal which remains during the light interception operation time period using the mechanical shutter, as described heretofore.

While certain embodiments have been described, these embodiments have been presented by way of example only, and are not intended to limit the scope of the inventions. Indeed, the novel methods and systems described herein can be embodied in a variety of other forms; furthermore, various omissions, substitutions and changes in the form of the methods and systems described herein can be made without departing from the spirit of the inventions. The accompanying claims and their equivalents are intended to cover such forms or modifications as would fall within the scope and spirit of the inventions.

## Claims

1. An infrared solid state imaging device comprising:

   an infrared detection element unit including heat sensitive pixels;
   an AD conversion unit which conducts analog-to-digital conversion on an infrared image signal obtained by the infrared detection element unit; and
   a digital signal processing unit which converts the image signal converted to a digital signal,
   the digital signal processing unit storing an image value produced from the digital signal, and acquired in a frame immediately preceding a current frame, subtracting an image value obtained by multiplying the image value acquired in the frame immediately preceding the current frame by a predetermined constant $\alpha$ in a range of 0 to 1, from an image value acquired in the current frame, and conducting processing of multiplying a resultant image value obtained by the subtraction by 1/(1 - a).

2. The device according to claim 1, wherein
   each of the heat sensitive pixels comprises a thermoelectric conversion element, and a support structure for supporting the thermoelectric conversion element over a hollow heat insulation structure formed within a semiconductor substrate,
   the support structure comprises an interconnection for reading out a signal from the thermoelectric conversion element, and
   the interconnection is connected to a row selection line and a signal line.

3. The device according to claim 1 or 2, comprising a mechanical shutter,
   wherein, in a frame during which the mechanical shutter is closed, the constant $\alpha$ is set equal to $\alpha_{th}$ which is determined from a product of a heat capacity and a thermal resistance of the heat sensitive pixel according to the following equation

$$\alpha_{th} = \exp\left(-t_f/R_{th}C_{th}\right)$$

   where $t_f$ is a frame period, $R_{th}$ is a thermal resistance, and $C_{th}$ is a heat capacity.

4. An infrared solid state imaging device comprising:

   an infrared detection element unit including a heat sensitive pixel;
   an AD conversion unit which conducts analog-to-digital conversion on an infrared image signal obtained by the infrared detection element unit; and
   a digital signal processing unit which converts the image signal converted to a digital signal,
   the digital signal processing unit storing an image value produced from the digital signal, and acquired in a frame immediately preceding a current frame, subtracting an image value obtained by multiplying the image value acquired in the frame immediately preceding the current frame by a predetermined constant $\alpha$ in a range of 0 to 1, from an image value acquired in the current frame, and conducting processing of multiplying a resultant image value
   obtained by the subtraction by 1/(1 - a).

5. The device according to claim 4, wherein
   the heat sensitive pixel comprises a thermoelectric conversion element, and a support structure for supporting the thermoelectric conversion element over a hollow heat insulation structure formed within a semiconductor substrate,

the support structure comprises an interconnection for reading out a signal from the thermoelectric conversion element, and
the interconnection is connected to a row selection line and a signal line.

6. The device according to claim 4 or 5, comprising a mechanical shutter,
wherein, in a frame during which the mechanical shutter is closed, the constant $\alpha$ is set equal to $\alpha_{th}$ which is determined from a product of a heat capacity and a thermal resistance of the heat sensitive pixel according to the following equation

$$\alpha_{th} = \exp\left(-t_f/R_{th}C_{th}\right)$$

where $t_f$ is a frame period, $R_{th}$ is a thermal resistance, and $C_{th}$ is a heat capacity.

INFRARED RAYS

INFRARED
DETECTION
ELEMENT UNIT

1

AD CONVERSION UNIT

4

DIGITAL SIGNAL
PROCESSING UNIT

5

INFRARED SOLID STATE IMAGING DEVICE

FIG. 1

$(pn)_{13}$

31

$(pn)_{13}$

ROW SELECTION CIRCUIT

33 (1)
33 (2)
33 (3)

(1)

(2)

$(pn)_{33}$

(3)

$(pn)_{31}$

34   34   34

201   201   201   COLUMN AMPLIFIER

24   24   24

32   VERTICAL SELECTION CIRCUIT

202
BUFFER

5

TO DIGITAL SIGNAL PROCESSING UNIT

1 INFRARED DETECTION ELEMENT UNIT(ANALOG DETECTION UNIT)

FIG. 2

TO VERTICAL SELECTION CIRCUIT(VERTICAL SIGNAL LINE)

12

161

162

IV                                                                                    IV

18      192

TO ROW SELECTION CIRCUIT(ROW SELECTION LINE)

# FIG. 3

12

162

162a  162b

161      194

191

192

193

n    p        n    p

18

17

# FIG. 4

FIG. 5

PULSE INPUT T(s)·ΔS

TEMPORAL CHANGE T(t) OF INPUT

RESPONSE OUTPUT TΔs·exp(s-t)

$_s$ Δs

t(TIME)

FIG. 6

FIG. 7

INFORMATION RETAINED BY
CURRENT FRAME FROM
TIME OF -∞ TO TIME t1

INFORMATION RETAINED BY
PRECEDING FRAME FROM
TIME OF -∞ TO TIME(t1-t$_f$)

MOVEMENT OF OBJECT
TEMPERATURE

$$\exp\left(-\frac{t_f}{\tau}\right)$$

PART SURROUNDED BY THICK
LINES REPRESENTS CURRENT
FRAME INFORMATION FROM
TIME(t1-t$_f$)TO TIME t1 WHICH
DOES NOT CONTAIN PRECEDING
FRAME INFORMATION
(AFTERIMAGE)

t1-2t$_f$    t1-t$_f$    t1

FIG. 8

INFRARED DETECTION
ELEMENT UNIT
(ANALOG DETECTION UNIT) —— 1

4 —— AD CONVERSION UNIT

$A(i-1,x,y)$

41 —— FRAME MEMORY

$A(i-1,x,y)$

$A(i,x,y)$

42 —— CONSTANT MULTIPLICATION UNIT

$\alpha A(i-1,x,y)$

—— 43 SUBTRACTER

$A(i,x,y) - \alpha A(i-1,x,y)$

44 —— CONSTANT MULTIPLICATION UNIT

$\beta\{A(i,x,y) - \alpha A(i-1,x,y)\}$

45 —— OUTPUT

TO DIGITAL SIGNAL PROCESSING UNIT 5

FIG. 9